# EUROPEAN PATENT SPECIFICATION

(11) **EP 4 167 099 B1**
(45) Date of publication and mention of the grant of the patent: **10.09.2025**
(21) Application number: 22201095.1
(22) Date of filing: 12.10.2022
(51) Int. Cl.: G06F 13/28, G06F 13/40

(54) **HARDWARE SYSTEM FOR AUTOMATIC DIRECT MEMORY ACCESS DATA FORMATTING**
HARDWARESYSTEM ZUR AUTOMATISCHEN FORMATIERUNG VON DIREKTSPEICHERZUGRIFFSDATEN
SYSTÈME MATÉRIEL POUR LE FORMATAGE AUTOMATIQUE DE DONNÉES D'ACCÈS DIRECT À LA MÉMOIRE

(30) Priority: 12.10.2021 US 202117499522
(43) Date of publication of application: 19.04.2023
(73) Proprietor: Texas Instruments Incorporated, Dallas, TX 75265 (US)
(72) Inventor: Shubeli, Guy, Ramat Hasharon (IL); Cherches, Barak, Ramat Hakovesh (IL); Weinrib, Uri, Mazkeret Batya (IL)
(74) Representative: Zeller, Andreas

(56) References cited:
- US-A- 5 937 170
- US-A1- 2007 074 091
- US-A1- 2009 296 683

## Description

### TECHNICAL BACKGROUND

Direct memory access (DMA) is used to transfer data directly without intervention of a central processing unit (CPU) core. In order for this transfer to function correctly, DMA channels need to be properly configured prior to the data transfer.

Typically, when a protocol is applied to the input data, software running on the CPU parses the protocol's headers, extracts the payload of the input data, transcodes the data, performs any necessary data manipulation, and transfers the input data to the proper location within the destination memory.

The length or quantity of the input data is typically not known in advance to the software, so the software must parse it, typically in an interrupt request (IRQ) routine, and then setup and execute the job accordingly.

This process of parsing, transcoding, and data manipulation requires numerous interactions between the hardware physical interface and the software. This requires real-time handling of the data, consumes CPU processing time, and requires the use of a large hardware first-in first-out (FIFO) memory in order to maintain the physical interface data flow without losing data. Document US 2007/074091 A1 discloses a checksum generator comprising an N-bit accumulator and a plurality of N-bit 3:2 carry save adders. Further, Document US 5 937 170 A discloses a computer system including a microprocessor running in big-endian mode and both big-endian and little-endian peripherals, including a little-endian SCSI controller that controls a hard disk. Moreover, Document US 2009/296683 A1 discloses a method for transmitting a protocol data unit including receiving one or more Ethernet packets and reading a header associated with each of the one or more Ethernet packets.

### OVERVIEW

The invention is set out in the independent claims. Preferred embodiments are defined by the dependent claims.

### BRIEF DESCRIPTION OF THE DRAWINGS

Many aspects of the disclosure can be better understood with reference to the following drawings.
Figure 1 illustrates an example embodiment of a system for transferring data including a hardware DMA data controller.
Figure 2 illustrates another example embodiment of a system for transferring data including a hardware DMA data controller.
Figure 3 illustrates another example embodiment of a system for transferring data including a hardware DMA data controller.
Figure 4 illustrates example data formatting of two different data formats.
Figure 5 illustrates an example method for operating a hardware DMA controller.
Figure 6 illustrates an example embodiment of a hardware DMA controller within an electronic device.

### DETAILED DESCRIPTION

In current complex electronic devices such as a system on a chip (SoC) device, a microcontroller (MCU) is used to manage any direct memory access (DMA) operations within the device. The MCU generates a job descriptor for the DMA operation describing the data payload and the location in memory to store the data in a storage operation, or to read the data in a read operation. A FIFO is used as a jitter buffer between the peripheral and the internal memory accesses.

For transmit operations, the DMA or the MCU copy data to the FIFO and the peripheral copies the data from the FIFO and transfers it over an interface (such as a serial peripheral interface (SPI), secure digital input output (SDIO), universal asynchronous receiver-transmitter (UART), and the like). For receive operations, the peripheral receives data from the interface and stores it in the FIFO. The MCU or DMA module then copy the data to the storage memory. This operation of the FIFO overcomes jitters and allows the MCU or the DMA module to work in intervals.

By transferring the required DMA management operations from the MCU to a dedicated hardware DMA module within the device, the MCU is available to process other instructions not involving the DMA routine, resulting in increased MCU efficiency.

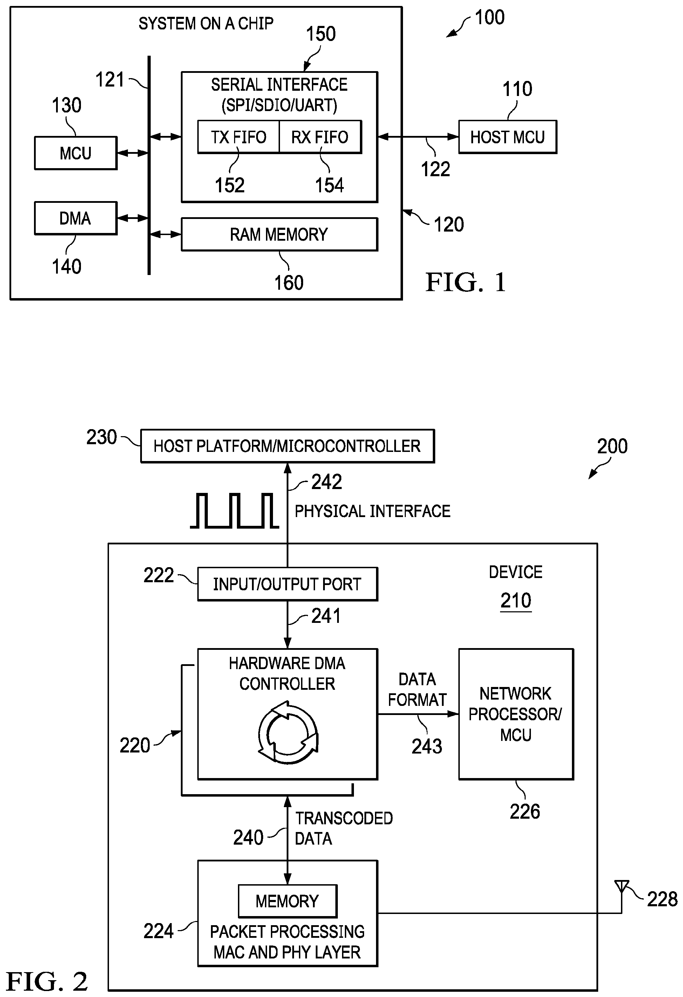

Figure 1 illustrates an example embodiment of a system 100 for transferring data including a hardware DMA data controller 140. In this example embodiment of the present invention, an electronic system 100 includes host microcontroller 110 and system on a chip 120. Here both host microcontroller 110 and system on a chip 120 are specific examples of electronic devices operating within an overall electronic system. Other example embodiments contain other electronic devices all within the scope of the present invention.

In this example embodiment, microcontroller 130, hardware DMA controller 140, serial interface 150, RAM memory 160, and bus 121 comprise system on a chip (SoC) 120. In this example embodiment, serial interface 150 further comprises a transmit FIFO 152 and a receive FIFO 154.

Serial interface 150 communicates with the host microcontroller 110 over physical interface 122. Microcontroller 130, hardware DMA controller 140, serial interface 150 and RAM memory 160 communicate with each other over bus 121. In this example embodiment, modules coupled with bus 121 are initiator or target modules. Initiator modules are nodes on the bus that are capable of initiating transactions. Microcontroller 130 is an initiator, while serial interface 150 is a target. This means that microcontroller 130 is able to access serial interface 150 and read or write data to and from it.

Hardware DMA controller 140 operates as both an initiator and a target. It operates as a target to allow microcontroller 130 to control and set jobs, and operates as an initiator in order to read data from the receive FIFO 154 within serial interface 150 and to copy that data to RAM memory 160. It also operates as an initiator in order to read data from RAM memory 160 and to copy that data into the transmit FIFO 152 within serial interface 150.

Note that Figure 1 is a greatly simplified illustration of system on a chip 120. In actual practice, system on a chip 120 is much more complex, including data buses and control interfaces between various modules and peripherals, and includes numerous modules and peripherals not illustrated in Figure 1.

In this example embodiment, hardware DMA controller 140 performs on-the-fly DMA transaction data parsing and execution without the need for direct control from microcontroller 130. When hardware DMA controller 140 receives input data from serial interface 150, it parses a header of the input data to detect the transaction length and data format, sets the target destination within RAM memory 160, allocates space within the correct memory pool within RAM memory 160, performs any necessary bit swizzling and transcoding of the input data.

These operations within hardware DMA controller 140 eliminates the need for pre-defined configurations, reduces MCU processing requirements and its associated software footprint, eliminates redundant software allocation, and avoids any possibility of a FIFO overflow.

In this example embodiment, hardware DMA controller 140 is configured to perform peripheral-to-memory, memory-to-peripheral, and memory-to-memory DMA transactions.

In operation, system on a chip receives input data comprising a header and payload from host microcontroller 110 over physical interface 122. Physical interface 122 comprises any of a wide variety of data interfaces including, but not limited to, serial peripheral interface (SPI), secure digital input output (SDIO), universal asynchronous receiver-transmitter (UART), and the like. The input physical data format is often unknown to system on a chip 120 prior to receiving the data. Hardware DMA controller 140 determines which format the input data comprises from a list of possible physical data formats to be received.

Once the physical data format is determined, hardware DMA controller 140 parses the header of the input data to determine correct data parameters for use in storing the data in RAM memory 160. The hardware DMA controller 140 determines the transaction length, or quantity of data to be stored, and the digital format of the input data.

Based upon the header, hardware DMA controller 140 determines a target destination for the data. Hardware DMA controller 140 allocates memory within the target destination based on the data parameters extracted from the header of the input data.

These data parameters include the data format, quantity of data, and the like. Hardware DMA controller 140 determines where to store the data within the target destination based at least in part on these data parameters. Memory allocation includes selecting between memory partitions within the target destination where the memory is partitioned according to data type.

Hardware DMA controller 140 then determines any bit swizzling necessary or data transcoding required before the data is stored in RAM memory 160, and performs the required bit swizzling and/or data transcoding on the payload.

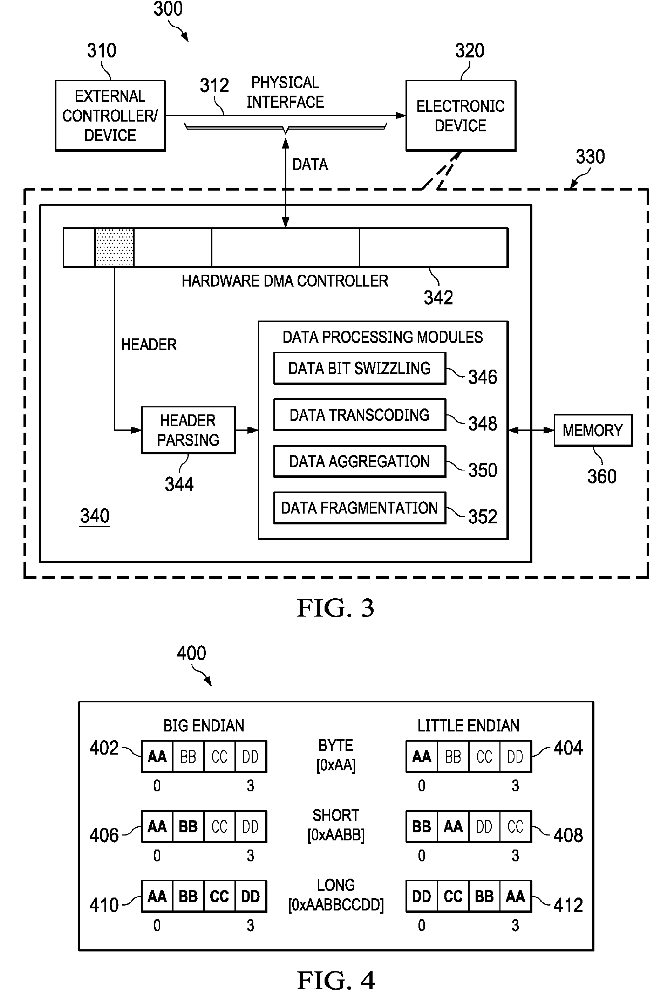

Bit swizzling is a term or art, particularly within computer graphics, used to describe the process of composing vectors by arbitrarily rearranging and combining components of other vectors. Transcoding is also a term of art used to describe the process of converting data from one data format to another. Figure 4 illustrates an example of transcoding data between big-endian and little-endian data formats.

Data formatting, bit swizzling, and transcoding are done on the fly by hardware DMA controller 140 so that hardware DMA controller 140 transfers the formatted payload for storage within the allocated memory within the target destination via an output port using direct memory access, while still receiving, formatting, bit swizzling, and transcoding incoming data. These data formatting, bit swizzling, and transcoding operations are typically performed on a per word basis, 32 or 64 bits at a time.

Figure 2 illustrates another example embodiment of a system 200 for transferring data including a hardware DMA data controller 220. In this example embodiment of the present invention, an electronic system 200 includes host platform/microcontroller 230 and electronic device 210. In this example embodiment, Input/Output (I/O) port 222, hardware DMA controller 220, memory 224, and network processor/MCU 226 comprise electronic device 210. In this example embodiment, electronic system 200 is further configured to communicate with other external devices via Wi-Fi antenna 228.

I/O Port 222 communicates with the host 230 over physical interface 242. I/O port 222 exchanges data with hardware DMA controller 220 over link 241, and hardware DMA controller 220 exchanges transcoded data with memory 224 over link 240. Hardware DMA controller 220 also provides a data format to network processor/MCU 226 over link 243.

Note that Figure 2 is a greatly simplified illustration of electronic device 210. In actual practice, electronic device 210 is much more complex, including data buses and control interfaces between various modules and peripherals, and includes numerous modules and peripherals not illustrated in Figure 2.

In this example embodiment, hardware DMA controller 220 performs on-the-fly DMA transaction data parsing and execution without the need for direct control from network processor/MCU 226. When hardware DMA controller 220 receives input data from I/O port 222, it parses a header of the input data to detect the transaction length and data format, sets the target destination within memory 224, allocates space within the correct memory pool within memory 224, performs any necessary bit swizzling and transcoding of the input data, and optionally performs an enhanced scatter-gather mode for data fragmentation and aggregation.

These operations within hardware DMA controller 220 eliminates the need for pre-defined configurations, reduces MCU processing requirements and its associated software footprint, eliminates redundant software allocation, and avoids any possibility of a FIFO overflow.

In this example embodiment, hardware DMA controller 220 is configured to perform peripheral-to-memory, memory-to-peripheral, and memory-to-memory DMA transactions.

In operation, electronic device 210 receives input data comprising a header and payload from host 230 over physical interface 242. Physical interface 242 comprises any of a wide variety of data interfaces including, but not limited to, serial peripheral interface (SPI), secure digital input output (SDIO), universal asynchronous receiver-transmitter (UART), and the like. The input physical data format is often unknown to electronic device 210 prior to receiving the data. Hardware DMA controller 220 determines which format the input data comprises from a list of possible physical data formats to be received.

Once the physical data format is determined, hardware DMA controller 220 parses the header of the input data to determine correct data parameters for use in storing the data in memory 224. For example, hardware DMA controller 220 determines the transaction length, or quantity of data to be stored, and the digital format of the input data.

Based upon the header, hardware DMA controller 220 determines a target destination for the data. This target destination may be memory 224, an external memory (not illustrated), an external device linked via Wi-Fi antenna 228, or the like. Hardware DMA controller 220 allocates memory within the target destination based on the data parameters extracted from the header of the input data.

These data parameters include the data format, quantity of data, and the like. Hardware DMA controller 220 determines where to store the data within the target destination based at least in part on these data parameters. Memory allocation includes selecting between memory partitions within the target destination where the memory is partitioned according to data type. Optionally, hardware DMA controller 220 performs data aggregation when receiving data from a memory and data fragmentation when allocating data to the memory. In some example embodiments of the present invention, this aggregation and fragmentation is executed as a scatter-gather mode for interfacing with the target destination.

Hardware DMA controller 220 then determines any bit swizzling necessary or data transcoding required before the data is stored in memory 224, and performs the required bit swizzling and/or data transcoding on the payload.

Bit swizzling is a term or art, particularly within computer graphics, used to describe the process of composing vectors by arbitrarily rearranging and combining components of other vectors. Transcoding is also a term of art used to describe the process of converting data from one data format to another. Figure 4 illustrates an example of transcoding data between big-endian and little-endian data formats.

Data formatting, bit swizzling, and transcoding are done on the fly by hardware DMA controller 220 so that hardware DMA controller 220 transfers the formatted payload for storage within the allocated memory within the target destination via an output port using direct memory access, while still receiving, formatting, bit swizzling, and transcoding incoming data. These data formatting, bit swizzling, and transcoding operations are typically performed on a per word basis, 32 or 64 bits at a time.

Figure 3 illustrates another example embodiment of a system 300 for transferring data including a hardware DMA data controller 340. In this example embodiment of the present invention, an electronic system 300 includes external controller/device 310 and electronic device 320. Electronic device 320 is configured to receive data from external controller/device 310 over physical interface 312. In this example embodiment, electronic device 320 includes hardware DMA controller 340 and memory 360. Hardware DMA controller 340 includes header parsing module 344 and data processing modules 346-352.

In this example embodiment, header processing module 344 and data processing modules 346-352 are instruction modules configured to direct processing circuitry within hardware DMA controller 340 to operate as described herein. Some data processing modules 346-352 are optional and are not used in every DMA operation performed by hardware DMA controller 340. Figure 3 illustrates data manipulation performed by hardware DMA controller 340 on data received by electronic device 320 from external controller/device 310 over physical interface 312. Note that hardware DMA controller 340 also performs other functions required for DMA operations such as those discussed above with respect to Figure 2.

Header parsing module 344 directs processing circuitry within hardware DMA controller 340 to parse the header 342 of the input data to determine correct data parameters for use in storing the data in memory 360. The header parsing module 344 determines the transaction length, or quantity of data to be stored, and the digital format of the input data.

Based at least in part on the data parameters determined by header parsing module 344, hardware DMA controller 340 determines any bit swizzling necessary or data transcoding required before the data is stored in memory 360, and performs the required bit swizzling and/or data transcoding on the payload.

Bit swizzling is a term or art, particularly within computer graphics, describing the process of composing vectors by arbitrarily rearranging and combining components of other vectors. Transcoding is also a term of art describing the process of converting data from one data format to another. Figure 4 illustrates an example of transcoding data between big-endian and little-endian data formats.

As needed, data bit swizzling module 346 directs processing circuitry within hardware DMA controller 340 to perform the necessary bit swizzling. Also as needed, data transcoding module 348 directs processing circuitry within hardware DMA controller 340 to perform the necessary data transcoding. Data aggregation module 350 directs processing circuitry within hardware DMA controller 340 to perform any necessary data aggregation in any type of scatter-gather memory operation. Data fragmentation module 352 directs processing circuitry within hardware DMA controller 340 to perform any necessary data fragmentation in any type of scatter-gather memory operation.

Once the payload is properly formatted for storage, hardware DMA controller 340 transfers the formatted payload for storage within the allocated memory within the target destination 360 via an output port using direct memory access.

Figure 4 illustrates example data formatting of two different data formats. Figure 4 illustrates an example of data formatting 400 performed by processing circuitry within hardware DMA controller 340.

In this example, data within the payload may be in either a big-endian or little-endian format. Figure 4 illustrates these two formats for data having lengths of byte [0xAA], short [0xAABB], and long [0xAABBCCDD] lengths. For data of byte lengths, there is no difference between big-endian 402 and little-endian 404 data. For data of short and long lengths however the data formats differ in the order in which they store the individual bytes of their data.

For data of short length, the data [0xAABB] is stored in memory location order [AA], [BB], as big-endian 406 data, while the same data is stored in memory location order [BB], [AA], as little endian-data 408. Similarly, for data of long length, the data [0xAABBCCDD] is stored in memory location order [AA], [BB], [CC], [DD], as big-endian 410 data, while the same data is stored in memory location order [DD], [CC], [BB], [AA], as little-endian 412 data.

Hardware DMA controller 340 to formats data between the big-endian format and the little-endian format as necessary based on the format of the input data and the format of data within memory 360. Figure 4 illustrates one example of data formatting. Hardware DMA controller 340 is configured to perform other different data formatting methods between data formats as required.

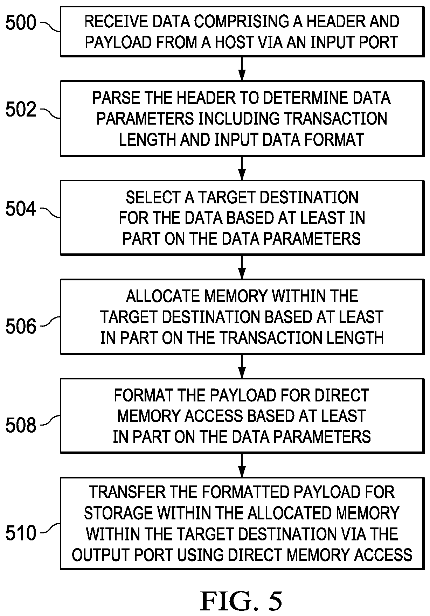

Figure 5 illustrates an example method for operating a hardware DMA controller 340. In this example method, processing circuitry within hardware DMA controller 340 is controlled by various modules to perform the following operations.

In this example embodiment, hardware DMA controller 340 receives data comprising a header and payload from an electronic device 310 via an input port, (operation 500). Hardware DMA controller 340 parses the header to determine data parameters including transaction length and input data format, (operation 502)

Hardware DMA controller 340 selects a target destination 360 for the data based at least in part on the data parameters, (operation 504). Hardware DMA controller 340 allocates memory within the target destination 360 for the data, (operation 506).

Hardware DMA controller 340 formats the payload for direct memory access based at least in part on the data parameters, (operation 508). In an example embodiment, this format operation is performed on a chunk or word basis and is repeated until the entire payload has been received. Hardware DMA controller 340 then transfers the formatted payload for storage within the allocated memory within the target destination 360 via the output port using direct memory access, (operation 510). In an example embodiment, this transfer operation is also performed on a chunk or word basis and is repeated until the entire payload has been stored.

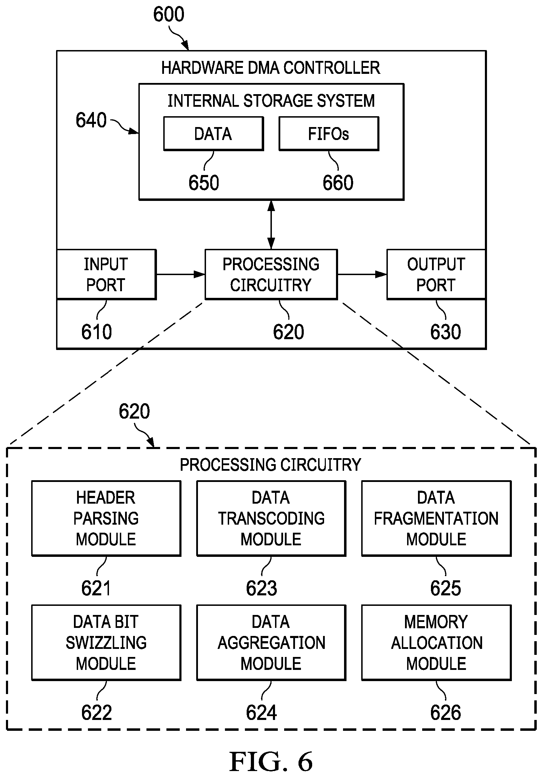

Figure 6 illustrates an example embodiment of a hardware DMA controller 600 within an electronic device 320. As discussed above, hardware DMA controller 600 may take on any of a wide variety of configurations. Here, an example configuration is provided for a hardware DMA controller 600 within electronic device 320 implemented as an ASIC. In some embodiments, hardware DMA controller 600 is a module within a system on a chip (SoC).

In this example embodiment, hardware DMA controller 600 comprises input port 610, processing circuitry 620, output port 630, and internal storage system 640. In one example configuration, input port 610 comprises circuitry configured to receive input data from an electronic device 310 for storage in a memory. Output port 630 comprises circuitry configured to send data and commands to a storage system or memory 360. In some embodiments, input port 610 and output port 630 are combined into a single input/output (I/O) port.

Processing circuitry 620 comprises electronic circuitry configured to perform the tasks of a hardware DMA controller 340 as described above. Processing circuitry 620 may be embedded in a complex electronic device 320 in some embodiments. Examples of processing circuitry 620 include general purpose central processing units, application specific processors, and logic devices, as well as any other type of processing device, combinations, or variations thereof. Processing circuitry 620 can be implemented within a single processing device but can also be distributed across multiple processing devices or sub-systems that cooperate in executing program instructions.

In an example embodiment, hardware DMA controller 600 is implemented as an application specific module and custom processing circuitry 620 is provided to perform the functions described herein via one or more hardware modules including header parsing module 621, data bit swizzling module 622, data transcoding module 623, data aggregation module 624, data fragmentation module 625, and memory allocation module 626.

Internal storage system 640 comprises any non-transitory computer readable storage media capable of storing data. Internal storage system 640 also includes various data structures 650 which comprise one or more databases, tables, lists, or other data structures, including a list of physical data formats, digital data formats, data buffers, and the like used by processing circuitry 620. Internal storage system 640 can include volatile and nonvolatile, removable and non-removable media implemented in any method or technology for storage of information, such as computer readable instructions, data structures, program modules, or other data.

Internal storage system 640 can be implemented as a single storage device but can also be implemented across multiple storage devices, sub-systems, or modules co-located or distributed relative to each other. Internal storage system 640 can comprise additional elements, such as a controller capable of communicating with processing circuitry 620. Examples of storage media include random access memory, read only memory, magnetic disks, optical disks, flash memory, virtual memory and non-virtual memory, magnetic cassettes, magnetic tape, magnetic disk storage or other magnetic storage devices, or any other medium which can be used to store the desired information and that can be accessed by an instruction execution system, as well as any combination or variation thereof.

In this example embodiment, internal storage system 640 also includes one or more FIFOs 660, such as Tx FIFO 152, and Rx FIFO 154 from Figure 1. These FIFOs 660 are used to overcome jitter and allow hardware DMA controller 600 to operate in intervals.

Header processing module 621 within processing circuitry 620 parses the data header in order to determine data parameters including transaction length and input data format. Data bit swizzling module 622 within processing circuitry 620 performs any required data bit swizzling. Data transcoding module 623 within processing circuitry 620 performs any required data transcoding. In some examples, data transcoding module 623 also performs any data formatting, such as illustrated in Figure 4, as necessary.

Data aggregation module 624 within processing circuitry 620 performs any required data aggregation in scatter-gather type modes. For example, data aggregation module 624 performs data aggregation on a plurality of data payloads.

Data fragmentation module 625 within processing circuitry 620 performs any required data fragmentation in scatter-gather type modes. For example, data fragmentation module 665 performs data fragmentation on the payload, by partitioning the payload in to a plurality of data partitions, processing each data partition separately, allocating a plurality of memory locations within the target destination corresponding to the plurality of data partitions, and storing each of the plurality of data partitions in one of the plurality of memory locations.

Memory allocation module 626 within processing circuitry 620 allocates memory for storage of the data.

## Claims

1. An electronic device (210, 320) comprising:
an input/output port (222) configured to transfer data between the electronic device (210, 320) and an external electronic device (230, 310);
a memory (224, 360) configured to store input data received from the external electronic device (230, 310); and
a hardware direct memory access controller (220, 340) coupled with the input/output port (222) and the memory (224, 360), configured to:
receive the input data comprising a header and payload from the external electronic device (230, 310) via the input/output port (222);
determine a physical data format of the received input data, wherein the physical data format of the input data is unknown to the electronic device (210, 320) prior to receiving the input data, wherein the hardware direct memory access controller (220, 340) determines which physical data format the received input data comprises from a list of possible physical data formats to be received,
parse the header (342) of the input data received via the input/output port (222) to determine and extract data parameters including a transaction length and a digital format of the input data;
select a target destination within the memory (224, 360) for the input data based at least in part on the data parameters extracted from the header (342) of the input data;
allocate storage locations within the target destination based at least in part on the transaction length included in the data parameters extracted from the header (342) of the input data;
format the payload for direct memory access based at least in part on the data parameters extracted from the header (342) of the input data; and
transfer the formatted payload for storage within the memory (224, 360) via the input/output port (222) using direct memory access.

2. The electronic device of claim 1, further configured: to perform bit swizzling on the input data.

3. The electronic device of claim 1, further configured: to allocate the memory (224, 360) within the target destination using a scatter-gather mode.

4. The electronic device of claim 3, further configured: to perform data aggregation on a plurality of data payloads.

5. The electronic device of claim 3, further configured: to perform data fragmentation on the payload, by partitioning the payload in to a plurality of data partitions, processing each data partition separately, allocating a plurality of memory locations within the target destination corresponding to the plurality of data partitions, and storing each of the plurality of data partitions in one of the plurality of memory locations.

6. The electronic device of claim 1, further configured: to allocate the memory (224, 360) within the target destination based at least in part on the digital format of the input data.

7. A method for operating a hardware direct memory access controller (220, 340) comprising:
receiving input data comprising a header (342) and payload from an electronic device (210, 320) via an input port (222);
determine a physical data format of the received input data based on a list of possible physical data formats, wherein the physical data format of the input data is unknown to the electronic device (210, 320) prior to receiving the input data;
parsing the header (342) of the input data received via the input port (222) to determine and extract data parameters including a transaction length and a digital format of the input data;
selecting a target destination for the input data based at least in part on the data parameters extracted from the header (342) of the input data;
allocating memory (224) within the target destination based at least in part on the transaction length included in the data parameters extracted from the header (342) of the input data;
formatting the payload for direct memory access based at least in part on the data parameters extracted from the header (342) of the input data; and
transferring the formatted payload for storage within the allocated memory (224, 360) within the target destination via an output port (222) using direct memory access.

8. The method of claim 7, further comprises performing bit swizzling on the input data.

9. The method of claim 7, further comprises allocating the memory (224) within the target destination using a scatter-gather mode.

10. The method of claim 9, further comprises performing data aggregation on a plurality of data payloads.

11. The method of claim 9, further comprises performing data fragmentation on the payload, by partitioning the payload in to a plurality of data partitions, processing each data partition separately, allocating a plurality of memory locations within the target destination corresponding to the plurality of data partitions, and storing each of the plurality of data partitions in one of the plurality of memory locations.

12. The method of claim 7, further comprises allocating the memory (224, 360) within the target destination based at least in part on the digital format of the input data.

13. The method of claim 7, wherein the input port (222) and the output port (222) together comprise an input/output port.

## Patentansprüche

1. Elektronische Vorrichtung (210, 320), die Folgendes umfasst:
einen Eingabe/Ausgabe-Port (222), der dazu konfiguriert ist, Daten zwischen der elektronischen Vorrichtung (210, 320) und einer externen elektronischen Vorrichtung (230, 310) zu übertragen;
einen Speicher (224, 360), der dazu konfiguriert ist, Eingabedaten zu speichern, die von der externen elektronischen Vorrichtung (230, 310) empfangen wurden; und
eine Hardware-Direktspeicherzugriffssteuerung (220, 340), die mit dem Eingabe/Ausgabe-Port (222) und dem Speicher (224, 360) gekoppelt ist und dazu konfiguriert ist:
die Eingabedaten, die einen Header und Nutzlasten umfassen, von der externen elektronischen Vorrichtung (230, 310) über den Eingabe/Ausgabe-Port (222) zu empfangen;
ein physikalisches Datenformat der empfangenen Eingabedaten zu bestimmen, wobei das physikalische Datenformat der Eingabedaten der elektronischen Vorrichtung (210, 320) vor dem Empfangen der Eingabedaten unbekannt ist, wobei die Hardware-Direktspeicherzugriffssteuerung (220, 340) bestimmt, welches physikalische Datenformat die empfangenen Eingabedaten aus einer Liste möglicher zu empfangender physikalischer Datenformate umfassen,
den Header (342) der über den Eingabe/Ausgabe-Port (222) empfangenen Eingabedaten zu parsen, um Datenparameter zu bestimmen und zu extrahieren, die eine Transaktionslänge und ein digitales Format der Eingabedaten beinhalten;
einen Zielort innerhalb des Speichers (224, 360) für die Eingabedaten zumindest teilweise basierend auf den Datenparametern auszuwählen, die aus dem Header (342) der Eingabedaten extrahiert wurden;
Speicherorte innerhalb des Zielorts zumindest teilweise basierend auf der Transaktionslänge zuzuweisen, die in den Datenparametern enthalten ist, die aus dem Header (342) der Eingabedaten extrahiert wurden;
die Nutzlasten für direkten Speicherzugriff zumindest teilweise basierend auf den Datenparametern zu formatieren, die aus dem Header (342) der Eingabedaten extrahiert wurden; und
die formatierten Nutzlasten zur Speicherung innerhalb des Speichers (224, 360) über den Eingabe/Ausgabe-Port (222) unter Verwendung eines direkten Speicherzugriffs zu übertragen.

2. Elektronische Vorrichtung nach Anspruch 1, die ferner dazu konfiguriert ist: Bit-Swizzling an den Eingabedaten durchzuführen.

3. Elektronische Vorrichtung nach Anspruch 1, die ferner dazu konfiguriert ist: den Speicher (224, 360) innerhalb des Zielorts unter Verwendung eines Streusammelmodus zuzuweisen.

4. Elektronische Vorrichtung nach Anspruch 3, die ferner dazu konfiguriert ist: eine Datenaggregation an mehreren Datennutzlasten durchzuführen.

5. Elektronische Vorrichtung nach Anspruch 3, die ferner dazu konfiguriert ist: eine Datenfragmentierung an der Nutzlast durch Partitionieren der Nutzlast in mehrere Datenpartitionen, separates Verarbeiten jeder Datenpartition, Zuweisen mehrerer Speicherorte innerhalb des Zielorts, die den mehreren Datenpartitionen entsprechen, und Speichern jeder der mehreren Datenpartitionen in einem der mehreren Speicherorte durchzuführen.

6. Elektronische Vorrichtung nach Anspruch 1, die ferner dazu konfiguriert ist: den Speicher (224, 360) innerhalb des Zielorts zumindest teilweise basierend auf dem digitalen Format der Eingabedaten zuzuweisen.

7. Verfahren zum Betreiben einer Hardware-Direktspeicherzugriffssteuerung (220, 340), das Folgendes umfasst:
Empfangen von Eingabedaten, die einen Header (342) und Nutzlasten umfassen, von einer elektronischen Vorrichtung (210, 320) über einen Eingabe-Port (222);
Bestimmen eines physikalischen Datenformats der empfangenen Eingabedaten basierend auf einer Liste möglicher physikalischer Datenformate, wobei das physikalische Datenformat der Eingabedaten der elektronischen Vorrichtung (210, 320) vor dem Empfangen der Eingabedaten unbekannt ist;
Parsen des Headers (342) der über den Eingabe-Port (222) empfangenen Eingabedaten, um Datenparameter zu bestimmen und zu extrahieren, die eine Transaktionslänge und ein digitales Format der Eingabedaten beinhalten;
Auswählen eines Zielorts für die Eingabedaten zumindest teilweise basierend auf den Datenparametern, die aus dem Header (342) der Eingabedaten extrahiert wurden;
Zuweisen von Speicher (224) innerhalb des Zielorts zumindest teilweise basierend auf der Transaktionslänge, die in den Datenparametern enthalten ist, die aus dem Header (342) der Eingabedaten extrahiert wurden;
Formatieren der Nutzlast für direkten Speicherzugriff zumindest teilweise basierend auf den Datenparametern, die aus dem Header (342) der Eingabedaten extrahiert wurden; und
Übertragen der formatierten Nutzlast zur Speicherung innerhalb des zugewiesenen Speichers (224, 360) innerhalb des Zielorts über einen Ausgabe-Port (222) unter Verwendung von direktem Speicherzugriff.

8. Verfahren nach Anspruch 7, das ferner das Durchführen von Bit-Swizzling an den Eingabedaten umfasst.

9. Verfahren nach Anspruch 7, das ferner das Zuweisen des Speichers (224) innerhalb des Zielorts unter Verwendung eines Streusammelmodus umfasst.

10. Verfahren nach Anspruch 9, das ferner das Durchführen einer Datenaggregation an mehreren Datennutzlasten umfasst.

11. Verfahren nach Anspruch 9, das ferner das Durchführen einer Datenfragmentierung an der Nutzlast durch Partitionieren der Nutzlast in mehrere Datenpartitionen, separates Verarbeiten jeder Datenpartition, Zuweisen mehrerer Speicherorte innerhalb des Zielorts, die den mehreren Datenpartitionen entsprechen, und Speichern jeder der mehreren Datenpartitionen in einem der mehreren Speicherorte umfasst.

12. Verfahren nach Anspruch 7, das ferner das Zuweisen des Speichers (224, 360) innerhalb des Zielorts zumindest teilweise basierend auf dem digitalen Format der Eingabedaten umfasst.

13. Verfahren nach Anspruch 7, wobei der Eingabe-Port (222) und der Ausgabe-Port (222) zusammen einen Eingabe/Ausgabe-Port umfassen.

## Revendications

1. Dispositif électronique (210, 320) comprenant :
un port d'entrée/sortie (222) configuré pour transférer des données entre le dispositif électronique (210, 320) et un dispositif électronique externe (230, 310) ;
une mémoire (224, 360) configurée pour stocker des données d'entrée reçues du dispositif électronique externe (230, 310) ; et
un contrôleur d'accès direct à la mémoire matérielle (220, 340) couplé au port d'entrée/sortie (222) et à la mémoire (224, 360),
configuré pour :
recevoir les données d'entrée comprenant un en-tête et une charge utile en provenance du dispositif électronique externe (230, 310) par l'intermédiaire du port d'entrée/sortie (222) ;
déterminer un format de données physique des données d'entrée reçues, où le format de données physique des données d'entrée est inconnu du dispositif électronique (210, 320) avant la réception des données d'entrée, où le contrôleur d'accès direct à la mémoire matérielle (220, 340) détermine quel format de données physique les données d'entrée reçues comprennent à partir d'une liste de formats de données physiques possibles à recevoir,
analyser l'en-tête (342) des données d'entrée reçues par l'intermédiaire du port d'entrée/sortie (222) afin de déterminer et d'extraire des paramètres de données comprenant une longueur de transaction et un format numérique des données d'entrée ;
sélectionner une destination cible dans la mémoire (224, 360) pour les données d'entrée sur la base, au moins en partie, des paramètres de données extraits de l'en-tête (342) des données d'entrée ;
allouer des emplacements de stockage dans la destination cible sur la base, au moins en partie, de la longueur de transaction incluse dans les paramètres de données extraits de l'en-tête (342) des données d'entrée ;
formater la charge utile pour un accès direct à la mémoire sur la base, au moins en partie, des paramètres de données extraits de l'en-tête (342) des données d'entrée ; et
transférer la charge utile formatée pour stockage dans la mémoire (224, 360) par l'intermédiaire du port d'entrée/sortie (222) à l'aide d'un accès direct à la mémoire.

2. Dispositif électronique selon la revendication 1, configuré en outre pour effectuer une permutation de bits sur les données d'entrée.

3. Dispositif électronique selon la revendication 1, configuré en outre pour allouer la mémoire (224, 360) dans la destination cible à l'aide d'un mode de collecte-dispersion.

4. Dispositif électronique selon la revendication 3, configuré en outre pour effectuer une agrégation de données sur une pluralité de charges utiles de données.

5. Dispositif électronique selon la revendication 3, configuré en outre pour effectuer une fragmentation des données sur la charge utile, en partitionnant la charge utile en une pluralité de partitions de données, en traitant chaque partition de données séparément, en allouant une pluralité d'emplacements de mémoire dans la destination cible correspondant à la pluralité de partitions de données, et en stockant chacune de la pluralité de partitions de données dans l'un de la pluralité d'emplacements de mémoire.

6. Dispositif électronique selon la revendication 1, configuré en outre pour allouer la mémoire (224, 360) dans la destination cible sur la base, au moins en partie, du format numérique des données d'entrée.

7. Procédé pour faire fonctionner un contrôleur d'accès direct à la mémoire matérielle (220, 340), le procédé comprenant les étapes suivantes :
recevoir des données d'entrée comprenant un en-tête (342) et une charge utile provenant d'un dispositif électronique (210, 320) par l'intermédiaire d'un port d'entrée (222) ;
déterminer un format de données physique des données d'entrée reçues sur la base d'une liste de formats de données physiques possibles, où le format de données physique des données d'entrée est inconnu du dispositif électronique (210, 320) avant la réception des données d'entrée ;
analyser l'en-tête (342) des données d'entrée reçues par l'intermédiaire du port d'entrée (222) afin de déterminer et d'extraire des paramètres de données comprenant une longueur de transaction et un format numérique des données d'entrée ;
sélectionner une destination cible pour les données d'entrée sur la base, au moins en partie, des paramètres de données extraits de l'en-tête (342) des données d'entrée ;
allouer une mémoire (224) dans la destination cible sur la base, au moins en partie, de la longueur de transaction incluse dans les paramètres de données extraits de l'en-tête (342) des données d'entrée ;
formater la charge utile pour un accès direct à la mémoire sur la base, au moins en partie, des paramètres de données extraits de l'en-tête (342) des données d'entrée ; et
transférer la charge utile formatée pour stockage dans la mémoire allouée (224, 360) dans la destination cible par l'intermédiaire d'un port de sortie (222) à l'aide d'un accès direct à la mémoire.

8. Procédé selon la revendication 7, comprenant en outre de procéder à une permutation des bits sur les données d'entrée.

9. Procédé selon la revendication 7, comprenant en outre d'allouer la mémoire (224) dans la destination cible à l'aide d'un mode de collecte-dispersion.

10. Procédé selon la revendication 9, comprenant en outre de procéder à une agrégation de données sur une pluralité de charges utiles de données.

11. Procédé selon la revendication 9, comprenant en outre de procéder à une fragmentation des données sur la charge utile, en partitionnant la charge utile en une pluralité de partitions de données, en traitant chaque partition de données séparément, en allouant une pluralité d'emplacements de mémoire dans la destination cible correspondant à la pluralité de partitions de données, et en stockant chacune de la pluralité de partitions de données dans l'un de la pluralité d'emplacements de mémoire.

12. Procédé selon la revendication 7, comprenant en outre d'allouer la mémoire (224, 360) dans la destination cible sur la base, au moins en partie, du format numérique des données d'entrée.

13. Procédé selon la revendication 7, dans lequel le port d'entrée (222) et le port de sortie (222) comprennent ensemble un port d'entrée/sortie.
